# EUROPEAN PATENT APPLICATION

(11) **EP 3 441 227 A1**
(43) Date of publication of application: **13.02.2019**
(21) Application number: 18184115.6
(22) Date of filing: 18.07.2018
(51) Int. Cl.: B41J 2/355, B41J 29/38, B41J 29/393

(54) **PRINTER APPARATUS AND PRINTING METHOD**

(30) Priority: 10.08.2017 JP 2017155511
(71) Applicant: Toshiba TEC Kabushiki Kaisha, Tokyo 141-8562 (JP)
(72) Inventor: NOZAKI, Mitsuhiro, Shinagawa-ku,, Tokyo 141-8562 (JP)
(74) Representative: Takeuchi, Maya

(57) **Abstract**

A printer apparatus including a driving device (10) that is energized during printing, a driving circuit (14,15) for the driving device, a circuit board on which the driving circuit is mounted, and a processor (11) programmed to determine whether or not a power-off instruction of the printer apparatus is given, and control the driving circuit to energize the motor (4) responsive to the power-off instruction. The driving device may be a stepper motor connected to a conveying roller that is rotated during printing, or a print head (1) comprising heating elements that generate heat during printing.

## Description

### FIELD

Embodiments described herein relate generally to a printer apparatus and a printing method.

### BACKGROUND

In the related art, a printer apparatus is used in various fields. For example, in a Point of Sales (POS) terminal, a printer apparatus such as a thermal printer is used for printing a receipt or the like. Also, in recent years, reduction of power consumption is required and there is a printer apparatus in which power consumption is reduced by reducing a load of an electronic circuit.

Incidentally, as the load decreases, an amount of electric power consumed by the electronic circuit also decreases, so that even after power supply is turned off, an electric charge stored in a capacitor or the like remains for a long period of time, and it tends to take a long time until the voltage in the electronic circuit is released. When an electric charge remains in the electronic circuit for a long period of time after the power supply is turned off, it may cause a malfunction. Therefore, a technique capable of shortening the discharge time period of the residual electric charge is desired.

In the field of a plasma display, a technique for discharging a residual electric charge by changing a driving method of the plasma display when power supply is turned off is proposed, but it is difficult to apply the technique to the printer apparatus.

### SUMMARY OF INVENTION

To solve the above-cited problems, there is provided a printer apparatus comprising:
a driving device that is energized during printing;
a driving circuit for the driving device;
a circuit board on which the driving circuit is mounted; and
a processor programmed to determine whether or not a power-off instruction of the printer apparatus is given, and control the driving circuit to energize the driving device responsive to the power-off instruction.

Preferably, the processor may control a time period during which the driving circuit energizes the driving device responsive to the power-off instruction so that the driving device does not operate in response thereto.

Preferably, the processor may control an amount of electric power supplied by the driving circuit responsive to the power-off instruction so that the driving device does not operate in response thereto.

Preferably, the driving device may be a motor that is energized to convey a sheet to be printed.

Preferably the apparatus may further comprise:
a conveying roller that is controlled to rotate to convey the sheet to be printed,
wherein the motor may be a stepper motor that drives the conveying roller.

Preferably, the driving device may be a print head that is energized during printing.

Preferably, the print head may include heating elements that generate heat when the print head is operating.

Preferably the apparatus may further comprise:
a detection circuit configured to detect that a power supply voltage supplied to the printer apparatus is lowered below a predetermined threshold,
wherein the processor may determine that the power-off instruction of the printer apparatus is given when the detection circuit detects that the power supply voltage supplied to the printer apparatus is lowered below the predetermined threshold.

Preferably, the processor may also be mounted on the circuit board.

In another exemplary embodiment, there is also provided a printing method executed by a processor of a printer apparatus including a driving device that is energized during printing, and a circuit board on which a control circuit configured to control an operation of the driving device, is mounted, the method comprising:
determining whether or not a power-off instruction of the printer apparatus is given; and
energizing the driving device upon determining that the power-off instruction is given.

Preferably, the driving device may be energized responsive to the power-off instruction for a brief enough time period that the driving device does not operate in response thereto.

Preferably, the driving device may be a stepper motor connected to a conveying roller that is rotated during printing.

Preferably, the driving device may be a print head comprising heating elements that generate heat during printing.

Preferably, an amount of electric power supplied to the driving device responsive to the power-off instruction may be small enough that the driving device does not operate in response thereto.

Preferably the method may further comprise:
detecting that a power supply voltage supplied to the printer apparatus is lowered below a predetermined threshold,
wherein the power-off instruction of the printer apparatus is determined as given responsive to detecting that the power supply voltage supplied to the printer apparatus is lowered below the predetermined threshold.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a partial schematic view of a printer according to an embodiment.
FIG. 2 is a block diagram of the printer according to the embodiment.
FIG. 3 is a diagram for explaining a discharge control of the printer according to the embodiment.
FIG. 4 is a flowchart illustrating an example of a method of discharging executed by the printer of the embodiment.

### DETAILED DESCRIPTION

Embodiments provide a printer apparatus and a printing method capable of shortening a discharge time period when power supply is turned off.

In general, according to one embodiment, a printer apparatus includes a driving circuit for the driving device, a circuit board on which the driving circuit is mounted, and a processor programmed to determine whether or not a power-off instruction of the printer apparatus is given, and control the driving circuit to energize the motor responsive to the power-off instruction. The driving device may be a stepper motor connected to a conveying roller that is rotated during printing, or a print head comprising heating elements that generate heat during printing.

Hereinafter, an embodiment of a printer apparatus and a printing method of an embodiment will be described in detail with reference to the accompanying drawings. In the following embodiment, an example in which the embodiment is applied to a thermal type printer apparatus will be described, but embodiments are not limited thereto.

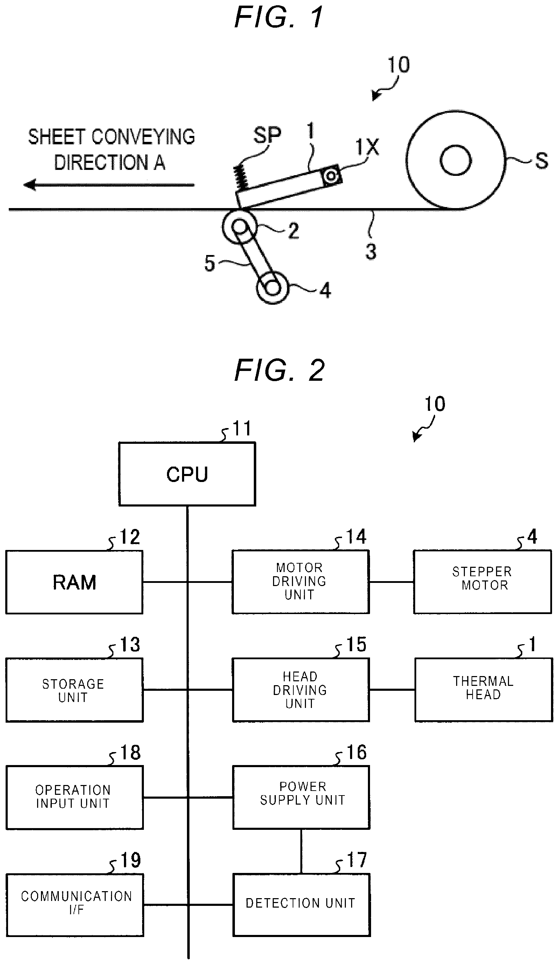

FIG. 1 is apartial schematic view of a printer 10 according to an embodiment. As illustrated in FIG. 1, the printer 10 includes a thermal head 1 and a platen roller 2. The thermal head 1 and the platen roller 2 are provided at a position at which a sheet 3 as a recording medium to be supplied is nipped, and the thermal head 1 and the platen roller 2 face each other. The sheet 3 is drawn out as a wound continuous sheet S as shown in FIG. 1.

One end of the thermal head 1 is rotatably supported around a rotation axis 1X as a rotation center. In addition, the thermal head 1 is biased by a biasing member, spring SP, so that the other end is in pressure contact with the platen roller 2.

The platen roller 2 is an example of a conveying roller. A stepper motor 4 is an example of a driving device . The stepper motor 4 is provided for the platen roller 2 and supplies a rotational driving force to the platen roller 2. Specifically, the platen roller 2 is connected to the stepper motor 4 via a belt 5 or the like for transmitting the rotational driving force of the stepper motor 4 to the platen roller 2. When the stepper motor 4 starts to rotate, the platen roller 2 rotates in conjunction with the rotation of the stepper motor 4 via the belt 5 or the like.

The sheet 3 is an example of the recording medium. The sheet 3 is, for example, a heat sensitive sheet such as a label sheet. The platen roller 2 rotates in a state where the sheet 3 is nipped between the thermal head 1 and the platen roller 2 so that the sheet 3 is conveyed in a sheet conveying direction A in FIG. 1.

The thermal head 1 is an example of the driving device. The thermal head 1 includes a plurality of heating elements (not illustrated) arranged in a width direction of the sheet 3. The thermal head 1 heats the heating elements corresponding to a portion to be printed on the sheet 3 among the plurality of the heating elements. Therefore, the thermal head 1 prints an image including letters or the like, corresponding to print data on the sheet 3 being conveyed, for each printing line.

The printer 10 inputs a strobe signal to the heating elements included in the thermal head 1 and the heating elements generate heat in response thereto. The thermal head 1 applies the heat to the sheet 3 to color the sheet 3, thereby printing an image corresponding to the print data on the sheet 3.

FIG. 2 is a block diagram of hardware components of the printer 10. As illustrated in FIG. 2, the printer 10 includes a computer having a Central Processing Unit (CPU) 11, a Random Access Memory (RAM) 12, and a memory unit 13.

The CPU 11 is an example of a determination unit and a discharge control unit. The CPU 11 executes various kinds of arithmetic processing to control each portion of the printer 10.

The RAM 12 is a volatile storage medium and is used as a workspace of the CPU 11. For example, the RAM 12 is used as a print buffer for temporarily storing the print data (e.g., image data) to be printed on the sheet 3. The print data is data to be printed on the sheet 3.

The memory unit 13 is a nonvolatile storage medium and stores various programs to be executed by the CPU 11 and setting information. The program to be executed by the printer 10 of the embodiment may be delivered by being recorded on a computer readable recording medium such as a CD-ROM, a flexible disk (FD), a CD-R, or a Digital Versatile Disk (DVD) as a file in an installable format or an executable format.

Furthermore, the program to be executed by the printer 10 of the embodiment may be delivered by being stored on a computer connected to a network such as the Internet and downloaded via the network. In addition, the operation program to be executed by the printer 10 of the embodiment may be configured so as to be supplied or distributed via a network such as the Internet.

In addition, the CPU 11 is connected to a motor driving unit 14 and a head driving unit 15. The motor driving unit 14 and the head driving unit 15 are embodied as circuits and are referred to herein as a driving control circuit.

The motor driving unit 14 controls an operation of the stepper motor 4 by energizing the stepper motor 4. Specifically, the motor driving unit 14 generates a current waveform (e.g., a pulse signal) for driving and rotating the stepper motor 4 under a control of the CPU 11. The motor driving unit 14 causes the stepper motor 4 to rotate by exciting the stepper motor 4 using the generated current waveform.

The head driving unit 15 controls the operation of the thermal head 1 by energizing the heating elements of the thermal head 1. Specifically, the head driving unit 15 generates a strobe signal (e.g., a pulse signal) for driving and heating the thermal head 1 under the control of the CPU 11. The head driving unit 15 uses the generated strobe signal to heat the heating elements of the thermal head 1.

In addition, the CPU 11 is connected to a power supply unit 16 and a detection unit 17, both of which are embodied as circuits. The power supply unit 16 is detachably connected to a commercial power supply (not illustrated) via a connector (for example, a connection plug or an electric outlet) or the like. The power supply unit 16 converts an AC voltage supplied from the commercial power supply into a DC voltage usable in the printer 10, and then supplies the DC voltage to each portion of the printer 10 via a power supply line (not illustrated) . Moreover, the power supply unit 16 may include a power supply switch for switching ON/OFF of electrical connection with the commercial power supply. In addition, the power supply unit 16 may be provided with a buffer capacitor in order to prevent the power supply to the printer 10 from being suddenly cut off when the connection with the commercial power supply is cut off.

The detection unit 17 monitors a voltage value (hereinafter, a power supply voltage) of the power supplied from the power supply unit 16. Upon detecting that the power supply voltage falls below a predetermined threshold, the detection unit 17 outputs a power fail signal for notifying the decrease of the power supply voltage to the CPU 11.

Here, as the threshold of the power supply voltage, in order to detect that a state of the printer 10 is under a transition from a power-on state to a power-off state, a value lower than the power supply voltage supplied when the power supply is turned on is set. Moreover, in order to reliably perform discharge control described later, it is preferable to set a value within a range in which an electronic circuit (e.g., circuit board B1 described later) such as the CPU 11 can operate.

In addition, the CPU 11 is connected to an operation input unit 18 and a communication interface (I/F) 19. The operation input unit 18 includes various keys for a user to operate the printer 10, and may be, for example, a keyboard or a touch screen. An operation input performed via the operation input unit 18 is input into the CPU 11. For example, when an operation instructing the start of printing is performed via the operation input unit 18, the CPU 11 controls the motor driving unit 14 and the head driving unit 15 to start printing on the sheet 3.

The communication interface 19 is an interface circuit for communicating with a host device such as a POS terminal. The communication interface 19 is compatible with, for example, infrared communication such as a IrDA, a Universal Serial Bus (USB), a Local Area Network (LAN), a RS-232C, a Bluetooth (registered trademark), or the like. The CPU 11 exchanges various kinds of information with the host device via the communication interface 19.

For example, the CPU 11 acquires print data transmitted from the host device via the communication interface 19. The acquired print data is temporarily stored in the RAM 12 and an image corresponding to the print data is printed on the sheet 3 by the control of the CPU 11. More specifically, the CPU 11 controls the motor driving unit 14 to drive the stepper motor 4 to rotate and cause the sheet 3 to be conveyed in the sheet conveying direction A. In addition, the CPU 11 controls the operation of the head driving unit 15 based on the print data to print the image corresponding to the print data on the sheet 3 conveyed in the sheet conveying direction A.

Meanwhile, in the printer 10 of the embodiment, an electric load of the electronic circuit is set to be low in order to satisfy a requirement for low power consumption . Specifically, the load of the electronic circuit (e.g., circuit board B1 described later) on which the CPU 11, the motor driving unit 14, the head driving unit 15, and the like are mounted is suppressed to be low so as to satisfy a predetermined low power consumption condition.

Meanwhile, as the load decreases, the amount of the electric power consumed by the electronic circuit decreases. Therefore, even after the power supply is turned off, the electric charge stored in the capacitor or the like remains for a long period of time and there is a tendency that it takes a long time until the voltage in the circuit board B1 is released. As described above, when the electric charge remains in the electronic circuit for a long period of time after the power supply is turned off, various problems such as erroneous operation of the driving device may occur.

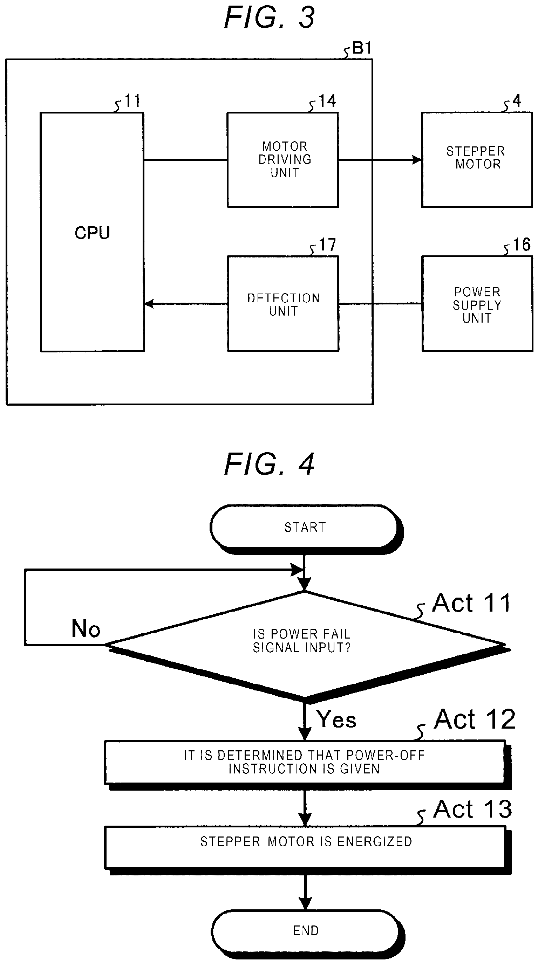

Therefore, in the printer 10, the discharge control for discharging the electric charge remaining in the electronic circuit is executed when the power supply of the printer 10 is turned off. Hereinafter, the discharge control of the printer 10 will be described with reference to FIGS. 3 and 4.

FIG. 3 is a diagram for explaining the discharge control of the printer 10. As illustrated in FIG. 3, the printer 10 includes the circuit board B1 on which various electronic components are mounted. For example, the CPU 11, the motor driving unit 14, the detection unit 17, and the like are mounted on the circuit board B1. Moreover, though not illustrated in FIG. 3 for the sake of simplicity of explanation, the RAM 12, the memory unit 13, the head driving unit 15, and the like may be mounted on the circuit board B1.

FIG. 4 is a flowchart of discharging executed by the printer . The discharging is achieved by cooperation of the CPU 11 and a program stored in the memory unit 13.

In FIG. 3, when the connection plug is removed from the electric outlet or the power supply switch is turned off, the connection between the power supply unit 16 and the commercial power supply is disconnected and the power supply voltage supplied from the power supply unit 16 is lowered. In this state, when the power supply voltage falls below the threshold, the detection unit 17 detects the decrease of the power supply voltage and the power fail signal is output to the CPU 11.

The CPU 11 waits for the input of the power fail signal (Act 11 of FIG. 4; No). When the power fail signal is input from the detection unit 17 (Act 11 of FIG. 4; Yes), the CPU 11 determines that the power-off instruction of the printer 10 is given (Act 12 of FIG. 4).

Subsequently, the CPU 11 controls the motor driving unit 14 to energize the stepper motor 4 in order to discharge the electric charge remaining in the circuit board B1 (Act 13 of FIG. 4).

The CPU 11 controls a time period during which the motor driving unit 14 is energized or controls a power amount supplied to the stepper motor 4, so that the stepper motor 4 does not operate. For example, the CPU 11 causes the stepper motor 4 to be energized for a short period of time to an extent that the stepper motor 4 does not operate. Such period of time may be, for example, a preset time period such as 1 ms. Energization may be continued even when the power supply voltage becomes zero, that is, while the operation of the CPU 11 itself is turned off. Moreover, for example, the CPU 11 may cause the stepper motor 4 to be energized in a state where a current value of the current waveform generated by the motor driving unit 14 at a normal time (e.g., when printing is performed) is lowered to 1/2 or the like, so that the stepper motor 4 does not operate.

As described above, when the power supply of the printer 10 is turned off, energization of the stepper motor 4 is executed by controlling the motor driving unit 14 provided in the circuit board B1. Therefore, since the electric charge remaining in the circuit board B1 can be efficiently discharged, it is possible to shorten a discharge time period when the power supply is turned off.

In addition, the printer 10 controls energization by the motor driving unit 14 so that the stepper motor 4 does not operate. Therefore, in the printer 10, it is possible to prevent the sheet 3 from being unintentionally conveyed, so that the discharging can be executed without the user being aware of the discharging.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the inventions. The accompanying claims and their equivalents are intended to cover such forms or modifications as would fall within the scope of the inventions.

For example, in the above-described embodiments, the electric charge remaining in the electronic circuit is discharged by energizing the stepper motor 4, but it is also possible to energize the other driving devices. Specifically, the CPU 11 may cause the thermal head 1 to energize by controlling the head driving unit 15 in Act 13. The CPU 11 controls a period of time during which the head driving unit 15 is energized or the power amount so that the thermal head 1 does not operate.

Therefore, since the electric charge remaining in the circuit board B1 can be efficiently discharged, it is possible to shorten the discharge time period when the power supply is turned off. It is possible to prevent the sheet 3 from being unintentionally printed, so that the discharging can be executed without the user being aware of the discharging.

In the embodiment, the driving units such as the motor driving unit 14 and the head driving unit 15 are mounted on the same electronic circuit (e.g., circuit board B1), but the embodiment is not limited thereto, and each of the driving units may be mounted on different electronic circuit. In this case, when it is determined that transition to the power-off is in progress, the CPU 11 causes the driving device corresponding to the driving unit to energize by controlling the driving unit mounted on each electronic circuit.

In the embodiment, it is determined that the power-off instruction of the printer 10 is given by the power fail signal input from the detection unit 17 and the discharge control is started, but a trigger of the start of the discharge control is not limited thereto. For example, the CPU 11 may start the discharge control under condition that the power-off instruction is given via a power supply switch or the like provided in the operation input unit 18. Alternately, the CPU 11 may start the discharge control under condition that the power-off instruction is given from a host apparatus via the communication interface 19. More specifically, when it is determined that the power-off instruction is given via the operation input unit 18 or the communication interface 19, the CPU 11 starts power-off control to turn off the electric power supplied from the power supply unit 16. The CPU 11 starts the discharge control described above in response to the start of the power-off control, thereby discharging the electric charge remaining in the electronic circuit.

In the above embodiment, the thermal type printer 10 is described as an example of the printer apparatus, but a printing method of the printer apparatus is not limited thereto. For example, it may be a printer apparatus of another printing method such as an inkjet method or a dot impact method.

## Claims

1. A printer apparatus comprising:
a driving device that is energized during printing;
a driving circuit for the driving device;
a circuit board on which the driving circuit is mounted; and
a processor programmed to determine whether or not a power-off instruction of the printer apparatus is given, and control the driving circuit to energize the driving device responsive to the power-off instruction.

2. The apparatus according to claim 1,
wherein the processor controls a time period during which the driving circuit energizes the driving device responsive to the power-off instruction so that the driving device does not operate in response thereto.

3. The apparatus according to claim 1 or 2,
wherein the processor controls an amount of electric power supplied by the driving circuit responsive to the power-off instruction so that the driving device does not operate in response thereto.

4. The apparatus according to any one of claims 1 to 3, wherein the driving device is a motor that is energized to convey a sheet to be printed.

5. The apparatus according to claim 4, further comprising:
a conveying roller that is controlled to rotate to convey the sheet to be printed,
wherein the motor is a stepper motor that drives the conveying roller.

6. The apparatus according to any one of claims 1 to 3, wherein the driving device is a print head that is energized during printing.

7. The apparatus according to claim 6, wherein the print head includes heating elements that generate heat when the print head is operating.

8. The apparatus according to any one of claims 1 to 7, further comprising:
a detection circuit configured to detect that a power supply voltage supplied to the printer apparatus is lowered below a predetermined threshold,
wherein the processor determines that the power-off instruction of the printer apparatus is given when the detection circuit detects that the power supply voltage supplied to the printer apparatus is lowered below the predetermined threshold.

9. The apparatus according to any one of claims 1 to 8, wherein the processor is also mounted on the circuit board.

10. A printing method executed by a processor of a printer apparatus including a driving device that is energized during printing, and a circuit board on which a control circuit configured to control an operation of the driving device, is mounted, the method comprising:
determining whether or not a power-off instruction of the printer apparatus is given; and
energizing the driving device upon determining that the power-off instruction is given.

11. The method according to claim 10,
wherein the driving device is energized responsive to the power-off instruction for a brief enough time period that the driving device does not operate in response thereto.

12. The method according to claim 10 or 11, wherein the driving device is a stepper motor connected to a conveying roller that is rotated during printing.

13. The method according to claim 10 or 11, wherein the driving device is a print head comprising heating elements that generate heat during printing.

14. The method according to any one of claims 10 to 13, wherein an amount of electric power supplied to the driving device responsive to the power-off instruction is small enough that the driving device does not operate in response thereto.

15. The method according to any one of claims 10 to 14, further comprising:
detecting that a power supply voltage supplied to the printer apparatus is lowered below a predetermined threshold,
wherein the power-off instruction of the printer apparatus is determined as given responsive to detecting that the power supply voltage supplied to the printer apparatus is lowered below the predetermined threshold.
